# FASCICULE DE BREVET EUROPEEN

(11) **EP 1 319 561 B1**
(45) Date de publication et mention de la délivrance du brevet: **21.03.2007**
(21) Numéro de dépôt: 02292968.1
(22) Date de dépôt: 03.12.2002
(51) Int. Cl.: B60R 21/34, B62D 25/10

(54) **Dispositif de protection des piétons en cas de choc frontal avec un véhicule automobile**
Schutzvorrichtung für die Fussgänger im Falle eines frontalen Zusammenstosses mit einem Kraftfahrzeug
Device for protection of pedestrians in the event of frontal crash with a motor vehicle

(30) Priorité: 12.12.2001 FR 0116016; 12.12.2001 FR 0116017; 19.07.2002 FR 0209191
(43) Date de publication de la demande: 18.06.2003
(60) Demande divisionnaire: 04075127.3
(73) Titulaire: Peugeot Citroen Automobiles SA, 92200 Neuilly sur Seine (FR)
(72) Inventeur: Clement, Daniel, 78170 La Celle Saint Cloud (FR); Marcuzzi, Jean-Charles, 95100 Argenteuil (FR)
(74) Mandataire: Robert, Jean-François

(56) Documents cités:
- WO-A-01/23226
- DE-A- 19 706 878
- DE-A- 19 712 961
- PATENT ABSTRACTS OF JAPAN vol. 2000, no. 02, 29 février 2000 (2000-02-29) & JP 11 310158 A (HONDA MOTOR CO LTD), 9 novembre 1999 (1999-11-09)
- PATENT ABSTRACTS OF JAPAN vol. 009, no. 007 (M-350), 12 janvier 1985 (1985-01-12) & JP 59 156872 A (NISSAN JIDOSHA KK), 6 septembre 1984 (1984-09-06)
- PATENT ABSTRACTS OF JAPAN vol. 008, no. 076 (M-288), 9 avril 1984 (1984-04-09) & JP 58 221773 A (NISSAN JIDOSHA KK), 23 décembre 1983 (1983-12-23)

## Description

La présente invention concerne un dispositif de protection des piétons en cas de choc frontal avec un véhicule automobile.

Elle se rapporte plus particulièrement à un véhicule comportant un capot articulé dans sa partie arrière sur la structure du véhicule, de façon que son ouverture s'effectue par l'avant, ce capot étant relié dans sa partie arrière à la structure du véhicule par des moyens de liaison aptes à être commandés pour élever cette partie arrière du capot afin de diminuer la gravité des chocs du piéton sur le capot, notamment au niveau de la tête.

En cas de choc frontal d'un véhicule avec un piéton, la tête du piéton vient, en général, heurter violemment le capot. Lors de l'impact de la tête du piéton sur le capot, il se produit un enfoncement du capot jusqu'à un impact éventuel avec des éléments rigides situés sous le capot tels que la batterie, des éléments porteurs... De même, il peut se produire un impact direct avec des zones rigides du capot. Ces impacts contre les éléments rigides constituent la cause principale des décès ou des blessures graves des piétons renversés.

On connaît des dispositifs de protection des piétons comprenant des moyens d'élévation de la partie arrière du capot, cette élévation s'accompagnant d'une rotation du capot autour de la serrure du mécanisme d'ouverture du capot, située en partie avant du capot, tandis que l'articulation ou charnière située en partie arrière est généralement directement supportée par les moyens d'élévation. De cette façon, l'activation des moyens d'élévation imprime à la charnière un mouvement vers le haut, qui entraîne dans sa course le capot.

Certaines architectures de véhicule ne permettent pas d'adopter un tel dispositif, en raison de la position particulière de l'articulation par rapport au capot et à la structure du véhicule. Ce sera notamment le cas des véhicules à pare-brise relativement long et plongeant et dont la partie inférieure des montants de baie est située au devant de l'axe d'articulation du capot. Dans de tels véhicules, l'articulation du capot sur la structure du véhicule est généralement réalisée au moyen de deux bras longitudinaux prolongeant le capot sur chacun de ses côtés vers l'arrière du véhicule jusqu'à un axe d'articulation situé à l'arrière des extrémités inférieures des montants de baie latéraux, dans une zone offrant un volume d'implantation extrêmement réduit. D'une façon générale, les véhicules offrant un volume d'implantation réduit autour de l'articulation du capot permettent difficilement de disposer cette articulation directement sur des moyens d'élévation du capot.

Le document WO 01/23226 A1 décrit un dispositif de protection des piétons en cas de choc frontal avec un véhicule automobile, ce dernier comportant un capot relié à un bras porteur articulé sur la structure du véhicule, autour d'un axe principal de rotation, des moyens de liaison assurant la fixation du capot sur une portion avant du bras porteur. En cas de choc, les moyens de liaison autorisent le capot à pivoter autour d'un axe secondaire du bras porteur, parallèle à l'axe principal, situé à distance de ce dernier vers l'avant du véhicule. Toutefois, les moyens de liaison ne comprennent pas de moyens d'actionnement aptes à être activés électriquement (l'activation est réalisée sur un airbag). De plus, les moyens de liaison ne comprennent pas de moyens d'actionnement agissant sur une portion intermédiaire du bras porteur (l'airbag agit plus en avant du véhicule, et non directement sur le bras porteur).

Le document JP 11 310158 A décrit un dispositif de protection des piétons en cas de choc frontal avec un véhicule automobile, ce dernier comportant un capot relié à un bras porteur articulé articulé sur la structure du véhicule, autour d'un axe principal de rotation, des moyens de liaison assurant la fixation du capot sur une portion avant du bras porteur. En cas de choc, les moyens de liaison provoquent une rotation du capot par rapport au bras porteur autour d'un axe secondaire de rotation, parallèle à l'axe principal, situé à distance de ce dernier vers l'avant du véhicule. Toutefois, le bras porteur ne prolonge pas le capot dans sa partie arrière. De plus, les moyens de liaison ne comprennent pas de moyens d'actionnement agissant sur une portion intermédiaire du bras porteur.

Le but de la présente invention est de pallier les inconvénients précédents en proposant un dispositif de protection des piétons particulièrement adapté aux véhicules présentant des contraintes architecturales et/ou d'implantation affectant l'articulation du capot et les zones adjacentes du véhicule.

A cet effet, la présente invention concerne un dispositif de protection des piétons en cas de choc frontal avec un véhicule automobile comprenant les caractéristiques selon la revendication 1.

On en déduit que très avantageusement, les moyens de liaison assurant l'élévation du capot coopèrent directement avec le capot d'une part et avec le bras porteur relié à l'articulation du capot autour de l'axe principal d'autre part. Ces moyens de liaison n'étant pas en appui sur la structure du véhicule, l'articulation autour de l'axe principal du capot ne subit aucun déplacement lorsque les moyens de liaison se présentent dans leur état actif de protection. Entre autres avantages, ceci autorise une architecture originale du véhicule, dans laquelle l'axe principal d'articulation du capot est situé très en retrait du bord arrière du capot, à proximité des extrémités inférieures des montants de baie latéraux du véhicule, voire à l'arrière de celles-ci.

Le dispositif de protection des piétons suivant l'invention peut également comporter une ou plusieurs des caractéristiques suivantes :
- des moyens de verrouillage à désactivation électrique sont interposés entre le levier et le bras porteur, de façon à pouvoir sélectivement empêcher ou autoriser le déplacement de l'extrémité arrière du levier depuis sa position initiale basse vers sa position finale haute,
- les moyens de verrouillage sont du type comprenant une goupille de blocage traversant au moins partiellement le levier et le bras porteur, ladite goupille étant éjectable de son support par la mise à feu d'une charge pyrotechnique commandée électriquement,
- les moyens de liaison entre le capot et le bras porteur comprennent des moyens d'actionnement interposés entre l'extrémité arrière du levier et une portion intermédiaire du bras porteur, située sensiblement entre l'axe principal et l'axe secondaire de rotation, de façon à provoquer le déplacement vers le haut de l'extrémité arrière du levier lorsque les moyens de verrouillage sont désactivés,
- les moyens d'actionnement comprennent un coulisseau monté mobile en translation dans un guide solidaire du bras porteur, entre une position rétractée et une position déployée correspondant respectivement aux états passif et actif des moyens de liaison, tandis que des moyens de rappel sont interposés entre le coulisseau et le guide pour permettre le déploiement automatique du coulisseau,
- la serrure du mécanisme d'ouverture de la partie avant du capot est conformée pour permettre le déplacement longitudinal et/ou l'abaissement de la partie avant du capot par rapport à la structure du véhicule lors de la rotation du capot autour de l'axe secondaire,
- la serrure du mécanisme d'ouverture de la partie avant du capot comprend un pêne ayant la forme générale d'un crochet apte à emprisonner une gâche ayant la forme générale d'un fil dans un passage délimité par le crochet et éventuellement par un élément adjacent au crochet, ce fil comportant une portion d'accrochage sensiblement longitudinale par rapport au véhicule de façon à pouvoir coulisser dans ledit passage selon cette direction longitudinale, le pêne et la gâche étant respectivement fixés sur la structure et le capot du véhicule ou inversement,
- l'axe principal de rotation du bras porteur par rapport à la structure du véhicule est situé à proximité des extrémités inférieures des montants de baie latéraux du véhicule, ou en retrait de celles-ci vers l'arrière du véhicule,
- des moyens de détection d'un choc piéton sont prévus en partie avant du véhicule et communiquent avec des moyens de traitement et de commande des moyens de liaison assurant la fixation du capot sur le bras porteur.

Les caractéristiques de l'invention mentionnées ci-dessus, ainsi que d'autres, apparaîtront plus clairement à la lecture de la description suivante d'un mode de réalisation, en se référant aux dessins annexés sur lesquels :
- la figure 1 est une vue schématique de la partie avant d'un véhicule pourvu d'un capot articulé dans sa partie arrière sur la structure du véhicule,
- la figure 2 est une vue en perspective d'une charnière connue assurant l'articulation du capot sur la structure du véhicule,
- les figures 3A et 3B sont des vues schématiques d'un capot articulé sur la structure d'un véhicule automobile pourvu d'un dispositif de protection des piétons suivant un premier mode de réalisation de l'invention, dans lequel les moyens de liaison du capot avec la structure du véhicule sont présentés respectivement dans leur état passif et dans leur état actif de protection,
- la figure 4 est une section suivant la ligne A-A du dispositif de la figure 3A,
- la figure 5 est une vue schématique d'un détail de réalisation du dispositif de protection des piétons de la figure 3A, et

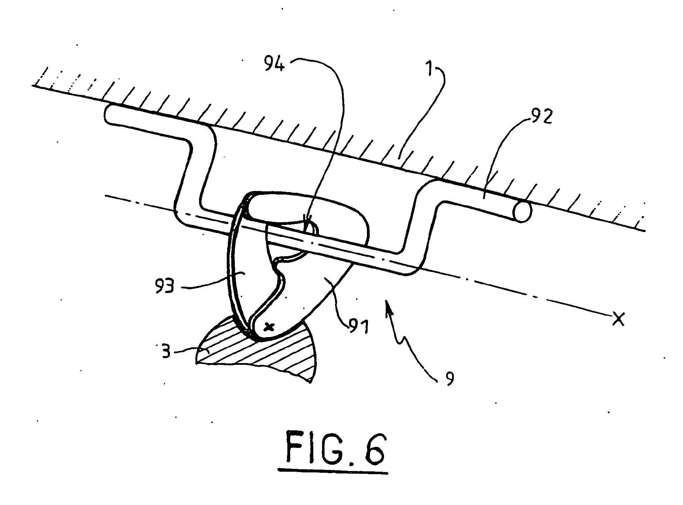

- la figure 6 est une vue schématique de la serrure du mécanisme d'ouverture située en partie avant du capot.

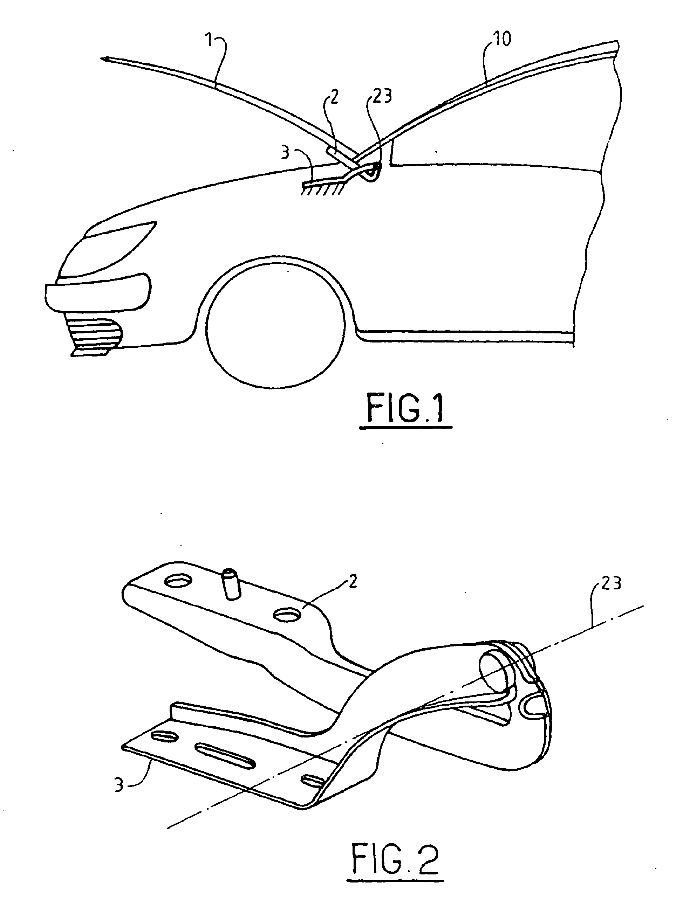

On a représenté à la figure 1 la partie avant d'un véhicule automobile pourvu d'un capot 1 articulé dans sa partie arrière sur la structure 3 d'un véhicule, au moyen de deux charnières de type connu. On notera que l'axe 23 d'articulation du capot 1 sur la structure 3 du véhicule est dirigé transversalement à la direction longitudinale du véhicule et est situé à l'arrière des extrémités inférieures des montants de baie latéraux du véhicule. Ce cas de figure est bien connu, en particulier lorsque le pare-brise du véhicule est relativement long et plongeant.

Une charnière de type connu, adaptée à une telle architecture du véhicule, est représentée à la figure 2. Elle comprend un bras porteur 2 supportant le capot 1, monté pivotant sur un élément fixé rigidement sur la structure 3 du véhicule, autour d'un axe d'articulation 23.

Par souci de clarté dans la description, à chaque fois qu'il sera fait référence à une charnière ou à des moyens de liaison entre le capot 1 et la structure 3 du véhicule, il faudra bien entendu comprendre que cette charnière ou ces moyens de liaison peuvent être disposés de chaque côté du véhicule, de façon symétrique par rapport à ce dernier.

Selon l'invention, des moyens de liaison 2, 4, 5 sont prévus entre le capot 1 et la structure 3 du véhicule. Ceux-ci peuvent comporter des éléments déjà constitutifs d'une charnière de type connu, notamment le bras porteur 2 monté pivotant sur la structure 3 du véhicule, autour d'un axe 23, 23' d'articulation. Pour les besoins de la description, nous désignerons désormais cet axe 23 d'articulation par les termes d'« axe principal d'articulation ».

Ces moyens de liaison 2, 4, 5 sont conformés pour se présenter sélectivement dans un état passif de protection Ep, dans lequel les degrés de liberté entre le capot 1 et le bras porteur 2 sont nuls, ou dans un état actif de protection Ea, dans lequel les moyens de liaison 2, 4, 5 provoquent une rotation du capot 1 par rapport au bras porteur 2 autour d'un axe secondaire 24 sensiblement parallèle à l'axe principal 23 et situé à distance de ce dernier 23 vers l'avant du véhicule.

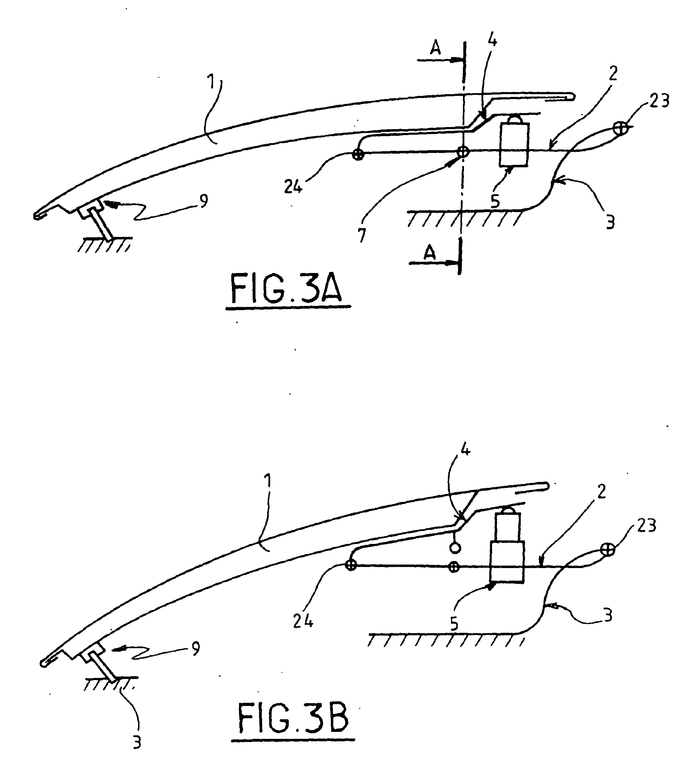

Comme cela est visible aux figures 3A et 3B, les moyens de liaison 2, 4, 5 comprennent un levier 4 fixé au capot 1, dont une extrémité avant est articulée sur une portion avant du bras porteur 2 autour de l'axe secondaire 24 de rotation. Une extrémité arrière de ce levier 4 peut être déplacée depuis une position initiale basse vers une position finale haute, en pivotant autour de l'axe secondaire 24 de rotation. On comprendra que ces positions initiale basse et finale haute du levier 4 correspondent respectivement aux états passifs Ep et actif Ea des moyens de liaison 2, 4, 5.

On notera que le levier 4 est fixé à la face inférieure du capot 1 de façon à former un ensemble rigide avec le capot 1.

Par ailleurs des moyens de verrouillage 7 sont interposés entre le levier 4 et le bras porteur 2 de façon à pouvoir empêcher tout déplacement relatif entre ces éléments 2, 4, ou plus précisément toute rotation autour de l'axe secondaire 24 (figures 3A, 3B). Ces moyens de verrouillage 7 peuvent être disposés sensiblement entre l'axe principal 23 et l'axe secondaire 24 de rotation.

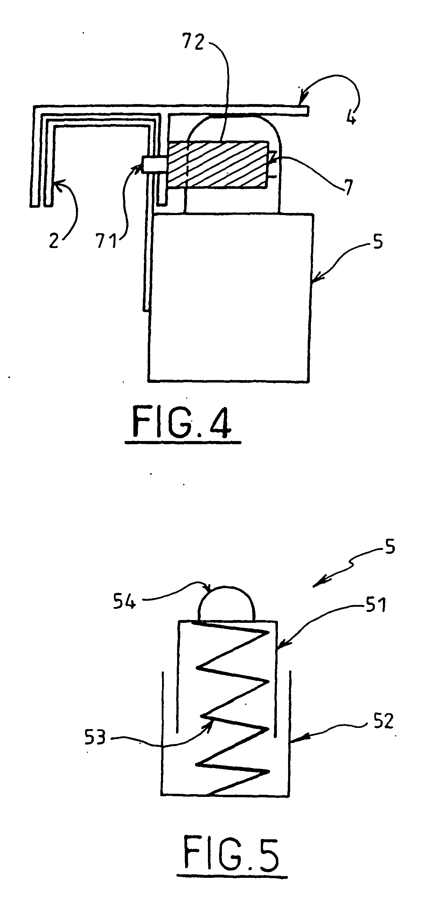

Selon l'invention, ces moyens de verrouillage 7 sont à désactivation électrique, c'est à dire qu'en l'absence d'un signal électrique propre à les désactiver, ils assurent la liaison et donc le verrouillage entre le levier 4 et le bras porteur 2. En référence à la figure 4, ces moyens de verrouillage 7 comprennent une goupille 71 de blocage traversant le levier 4 et le bras porteur 2, cette goupille 71 étant éjectable de son support 72 par la mise à feu d'une charge pyrotechnique commandée électriquement. Ainsi lorsqu'un signal électrique est envoyé aux moyens de verrouillage 7 pour les désactiver, les moyens de liaison 2, 4, 5 sont autorisés à passer de leur état passif Ep de protection à leur état actif Ea de protection. Le support 72 de la goupille 71 est par exemple fixé sur le levier 4, comme représenté à la figure 4.

On précisera que ce signal électrique est envoyé par des moyens de commande et de traitement des informations tel qu'un boîtier central de gestion électronique embarqué dans le véhicule, communiquant avec des moyens de détection d'un choc piéton prévus en partie avant du véhicule.

D'autre part, pour provoquer le passage des moyens de liaison 2, 4, 5 de leur état passif Ep à leur état actif Ea de protection, ces moyens de liaison 2, 4, 5 comprennent des moyens d'actionnement 5 interposés entre l'extrémité arrière du levier 4 et une portion intermédiaire du bras porteur 2, située sensiblement entre l'axe principal 23 et l'axe secondaire 24 de rotation. Plus précisément, ces moyens d'actionnement 5 sont conformés pour provoquer le déplacement vers le haut de l'extrémité arrière du levier (4), qui pivote alors autour de l'axe secondaire 24 de rotation, lorsque les moyens de verrouillage 7 ne font pas obstacle à ce déplacement, c'est à dire lorsqu'ils sont désactivés. Entraîné par le levier 4, le capot 1 pivote alors également autour de l'axe secondaire 24.

Comme le montre la figure 5, ces moyens d'actionnement 5 comprennent un coulisseau 51 monté mobile en translation dans un guide 52 solidaire du bras porteur 2, entre une position rétractée et une position déployée, correspondant respectivement aux états passif Ep et actifs Ea des moyens de liaison 2, 4, 5. Avantageusement, des moyens de rappel 53 sont interposés entre le coulisseau 51 et le guide 52 pour permettre le déploiement automatique du coulisseau 51. Ces moyens de rappel 53 peuvent être par exemple constitués d'un ressort de compression de type classique.

Le guide 52 peut être fixé rigidement sur une portion intermédiaire du bras porteur 2, entre l'axe principal 23 et l'axe secondaire 24 de rotation.

En partie supérieure du coulisseau 51, une butée 54 est prévue pour coopérer en contact avec un flan correspondant de l'extrémité arrière du levier 4. Cette butée 54 pourra avoir une forme générale hémisphérique, de façon à favoriser un léger glissement entre la butée et le flan du levier 4 lors de l'élévation du coulisseau 51. On comprendra que ce glissement longitudinal par rapport à la direction du véhicule est induit par la cinématique des moyens de liaison 2, 4, 5.

Par ailleurs, dans la partie avant du capot 1, la serrure 9 du mécanisme d'ouverture est conformée pour permettre le déplacement longitudinal et/ou l'abaissement de la partie avant du capot 1 par rapport à la structure 3 du véhicule lors de la rotation du capot 1 autour de l'axe secondaire 24.

Plus précisément, comme représenté à la figure 8, la serrure 9 comprend un pêne 91 ayant la forme générale d'un crochet apte à emprisonner une gâche 92 ayant la forme générale d'un fil dans un passage 94 délimité par le crochet et éventuellement par un élément adjacent 93 au crochet. Ce fil comporte une portion d'accrochage sensiblement longitudinale par rapport au véhicule de façon à pouvoir coulisser dans ledit passage 94 selon cette direction longitudinale. Comme le montre la figure 8, le pêne 91 et la gâche 92 peuvent être montés respectivement sur la structure 3 et le capot 1 du véhicule. Dans une variante de réalisation (non représenté), le pêne 91 et la gâche 92 peuvent être respectivement solidaires du capot 1 et de la structure 3 du véhicule.

Avantageusement, on comprendra que le dispositif de protection des piétons suivant l'invention est particulièrement adapté aux véhicules offrant un volume d'implantation réduit à proximité de l'articulation du capot sur la structure du véhicule. Le dispositif de l'invention s'avèrera notamment très approprié aux véhicules dont l'axe d'articulation du capot est situé à proximité des extrémités inférieures des montants de baie latéraux du véhicule, ou en retrait de celles-ci vers l'arrière du véhicule.

Bien, que l'invention ait été décrite en liaison avec un mode de réalisation particulier, elle comprend tous les équivalents techniques des moyens décrits.

## Revendications

1. Dispositif de protection des piétons en cas de choc frontal avec un véhicule automobile, ce dernier comportant un capot (1) prolongé dans sa partie arrière par au moins un bras porteur (2) monté à rotation sur la structure (3) du véhicule autour d'un axe principal (23) perpendiculaire à la direction longitudinale du véhicule, des moyens de liaison (2, 4, 5) assurant la fixation du capot (1) sur une portion avant du bras porteur (2) pouvant être commandés électriquement, de façon à se présenter sélectivement dans un état passif de protection (Ep), dans lequel les degrés de liberté entre le capot (1) et le bras porteur (2) sont nuls, ou dans un état actif de protection (Ea) dans lequel lesdits moyens de liaison (2, 4, 5) provoquent une rotation du capot (1) par rapport au bras porteur (2) autour d'un axe secondaire (24) sensiblement parallèle à l'axe principal (23) et situé à distance de ce dernier (23) vers l'avant du véhicule, les moyens de liaison (2, 4, 5) entre le capot (1) et le bras porteur (2) comprennant un levier (4) fixé au capot (1), dont une extrémité avant est articulée sur une portion avant du bras porteur (2) autour de l'axe secondaire (24) de rotation, tandis que son extrémité arrière peut être déplacée depuis une position initiale basse vers une position finale haute, correspondant respectivement aux états passifs (Ep) et actifs (Ea) des moyens de liaison (2, 4, 5), des moyens de verrouillage (7) à désactivation électrique étant en outre interposés entre le levier (4) et le bras porteur (2), de façon à pouvoir sélectivement empêcher ou autoriser le déplacement de l'extrémité arrière du levier (4) depuis sa position initiale basse vers sa position finale haute, **caractérisé en ce que** les moyens de liaison (2, 4, 5) entre le capot (1) et le bras porteur (2) comprennent des moyens d'actionnement (5) interposés entre l'extrémité arrière du levier (4) et une portion intermédiaire du bras porteur (2), située sensiblement entre l'axe principal (23) et l'axe secondaire (24) de rotation, de façon à provoquer le déplacement vers le haut de l'extrémité arrière du levier (4) lorsque les moyens de verrouillage (7) sont désactivés.

2. Dispositif de protection des piétons selon la revendication 1, **caractérisé en ce que** les moyens de verrouillage (7) sont du type comprenant une goupille (71) de blocage traversant au moins partiellement le levier (4) et le bras porteur (2), ladite goupille (71) étant éjectable de son support (72) par la mise à feu d'une charge pyrotechnique commandée électriquement.

3. Dispositif de protection des piétons selon la revendication 1 ou 2, **caractérisé en ce que** les moyens d'actionnement (5) comprennent un coulisseau (51) monté mobile en translation dans un guide (52) solidaire du bras porteur (2), entre une position rétractée et une position déployée correspondant respectivement aux états passif (Ep) et actif (Ea) des moyens de liaison (2, 4, 5), tandis que des moyens de rappel (53) sont interposés entre le coulisseau (51) et le guide (52) pour permettre le déploiement automatique du coulisseau (51).

4. Dispositif de protection des piétons selon l'une quelconque des revendications précédentes, **caractérisé en ce que** la serrure (9) du mécanisme d'ouverture de la partie avant du capot (1) est conformée pour permettre le déplacement longitudinal et/ou l'abaissement de la partie avant du capot (1) par rapport à la structure (3) du véhicule lors de la rotation du capot (1) autour de l'axe secondaire (24).

5. Dispositif de protection des piétons selon la revendication 4, **caractérisé en ce que** la serrure (9) du mécanisme d'ouverture de la partie avant du capot (1) comprend un pêne (91) ayant la forme générale d'un crochet apte à emprisonner une gâche (92) ayant la forme générale d'un fil dans un passage (94) délimité par le crochet et éventuellement par un élément adjacent (93) au crochet, ce fil comportant une portion d'accrochage sensiblement longitudinale par rapport au véhicule de façon à pouvoir coulisser dans ledit passage (94) selon cette direction longitudinale, le pêne (91) et la gâche (92) étant respectivement fixés sur la structure (3) et le capot (1) du véhicule ou inversement.

6. Dispositif de protection des piétons selon l'une quelconque des revendications précédentes, **caractérisé en ce que** l'axe principal (23) de rotation du bras porteur (2) par rapport à la structure (3) du véhicule est situé à proximité des extrémités inférieures des montants de baie latéraux du véhicule, ou en retrait de celles-ci vers l'arrière du véhicule.

7. Dispositif de protection des piétons selon l'une quelconque des revendications précédentes, **caractérisé en ce que** des moyens de détection d'un choc piéton sont prévus en partie avant du véhicule et communiquent avec des moyens de traitement et de commande des moyens de liaison (2, 4, 5) assurant la fixation du capot (1) sur le bras porteur (2).

## Claims

1. Device for protection of pedestrians in the event of a frontal impact with a motor vehicle, the latter comprising a bonnet (1) extended in its rear portion by at least one carrying arm (2) mounted so as to rotate on the structure (3) of the vehicle about a principal axis (23) perpendicular to the longitudinal direction of the vehicle, linking means (2, 4, 5) ensuring the fixing of the bonnet (1) to a front portion of the carrying arm (2) being controllable electrically, so as to be selectively in a passive protection state (Ep), in which the degrees of freedom between the bonnet (1) and the carrying arm (2) are zero, or in an active protection state (Ea), in which said linking means (2, 4, 5) cause a rotation of the bonnet (1) with respect to the carrying arm (2) about a secondary axis (24) substantially parallel to the principal axis (23) and located some distance from the latter (23) towards the front of the vehicle, the linking means (2, 4, 5) between the bonnet (1) and the carrying arm (2) comprising a lever (4) fixed to the bonnet (1), a front end of which is articulated on a front portion of the carrying arm (2) about the secondary axis (24) of rotation, while its rear end can be displaced from a low initial position towards a high final position, corresponding respectively to the passive (Ep) and active (Ea) states of the linking means (2, 4, 5), electrically deactivated locking means (7) being further interposed between the lever (4) and the carrying arm (2), so as to be able to selectively prevent or allow the displacement of the rear end of the lever (4) from its low initial position towards its high final position, **characterised in that** the linking means (2, 4, 5) between the bonnet (1) and the carrying arm (2) comprise actuation means (5) interposed between the rear end of the lever (4) and an intermediate portion of the carrying arm (2), located substantially between the principal axis (23) and the secondary axis (24) of rotation, so as to cause the upwards displacement of the rear end of the lever (4) when the locking means (7) are deactivated.

2. Device for protection of pedestrians according to Claim 1, **characterised in that** the locking means (7) are of the type comprising a locking pin (71) passing at least partly through the lever (4) and the carrying arm (2), said pin (71) being ejectable from its support (72) by igniting an electrically controlled pyrotechnic charge.

3. Device for protection of pedestrians according to Claim 1 or 2, **characterised in that** the actuation means (5) comprise a slider (51) mounted so as to be mobile in translation in a guide (52) integral with the carrying arm (2), between a retracted position and a deployed position corresponding respectively to the passive (Ep) and active (Ea) states of the linking means (2, 4, 5), while return means (53) are interposed between the slider (51) and the guide (52) in order to permit the automatic deployment of the slider (51).

4. Device for protection of pedestrians according to any one of the preceding claims, **characterised in that** the lock (9) of the mechanism for opening the front portion of the bonnet (1) is shaped in order to allow the longitudinal displacement and/or lowering of the front portion of the bonnet (1) relative to the structure (3) of the vehicle during the rotation of the bonnet (1) about the secondary axis (24).

5. Device for protection of pedestrians according to Claim 4, **characterised in that** the lock (9) of the mechanism for opening the front portion of the bonnet (1) comprises a generally hook-shaped bolt (91) capable of capturing a generally wire-shaped striker (92) in a passage (94) delimited by the hook and, if appropriate, by an element (93) adjacent to the hook, this wire comprising a substantially longitudinal hooking portion relative to the vehicle so as to be able to slide within said passage (94) in this longitudinal direction, the bolt (91) and the striker (92) being fixed respectively to the structure (3) and the bonnet (1) of the vehicle or vice versa.

6. Device for protection of pedestrians according to any one of the preceding claims, **characterised in that** the principal axis (23) of rotation of the carrying arm (2) with respect to the structure (3) of the vehicle is located near the lower ends of the lateral window pillars of the vehicle, or set back from these towards the rear of the vehicle.

7. Device for protection of pedestrians according to any one of the preceding claims, **characterised in that** means for detecting a pedestrian impact are provided in the front portion of the vehicle and communicate with processing means and means for controlling the linking means (2, 4, 5) ensuring the fixing of the bonnet (1) to the carrying arm (2).

## Patentansprüche

1. Vorrichtung zum Schutz von Fußgängern bei einem Frontalzusammenstoß mit einem Kraftfahrzeug, wobei Letzteres eine Motorhaube (1) aufweist, die in ihrem hinteren Abschnitt von mindestens einem Tragarm (2) verlängert wird, der um eine Hauptachse (23), die senkrecht zur Längsrichtung des Fahrzeugs verläuft, drehbar am Aufbau (3) des Fahrzeugs montiert ist, wobei Verbindungsmittel (2, 4, 5) für die Befestigung der Motorhaube (1) an einem vorderen Abschnitt des Tragarms (2) sorgen und elektrisch so gesteuert werden können, dass sie sich wahlweise in einem passiven Schutzzustand (Ep), in dem die Freiheitsgrade zwischen der Motorhaube (1) und dem Tragarm (2) null sind, oder in einem aktiven Schutzzustand (Ea) befinden, in dem die Verbindungsmittel (2, 4, 5) eine Drehung der Motorhaube (1) gegenüber dem Tragarm (2) um eine sekundäre Achse (24) bewirken, die im Wesentlichen parallel zur Hauptachse (23) und von dieser beabstandet weiter vorne am Fahrzeug angeordnet ist, wobei die Verbindungsmittel (2, 4, 5) zwischen der Motorhaube (1) und dem Tragarm (2) einen an der Motorhaube (1) befestigten Hebel (4) umfassen, dessen vorderes Ende an einem vorderen Abschnitt des Tragarms (2) um die sekundäre Drehachse (24) angelenkt ist, während sein hinteres Ende von einer unteren Ausgangsposition in eine obere Endposition bewegt werden kann, die dem passiven Zustand (Ep) beziehungsweise dem aktiven Zustand (Ea) der Verbindungsmittel (2, 4, 5) entsprechen, wobei darüber hinaus elektrisch deaktivierbare Verriegelungsmittel (7) zwischen den Hebel (4) und den Tragarm (2) derart angeordnet sind, dass sie die Bewegung des hinteren Endes des Hebels (4) von seiner unteren Ausgangsposition in seine obere Endposition wahlweise verhindern oder zulassen, **dadurch gekennzeichnet, dass** die Verbindungsmittel (2, 4, 5) zwischen der Motorhaube (1) und dem Tragarm (2) Betätigungsmittel (5) zwischen dem hinteren Ende des Hebels (4) und einem Abschnitt des Tragarms (2) zwischen der Hauptdrehachse (23) und der sekundären Drehachse (24) umfassen, sodass das hintere Ende des Hebels (4) nach oben bewegt wird, wenn die Verriegelungsmittel (7) deaktiviert werden.

2. Vorrichtung zum Schutz von Fußgängern nach Anspruch 1, **dadurch gekennzeichnet, dass** die Verriegelungsmittel (7) einen Blockierstift (71) umfassen, der den Hebel (4) und den Tagarm (2) zumindest teilweise durchläuft und durch die elektrisch gesteuerte Zündung einer pyrotechnischen Ladung aus seinem Träger (72) ausgeworfen werden kann.

3. Vorrichtung zum Schutz von Fußgängern nach Anspruch 1 oder 2, **dadurch gekennzeichnet, dass** die Betätigungsmittel (5) einen Schlitten (51) umfassen, der in einer mit dem Tragarm (2) fest verbundenen Führung (52) in Translation zwischen einer eingezogenen und einer ausgefahrenen Position beweglich montiert ist, die dem passiven Zustand (Ep) beziehungsweise dem aktiven Zustand (Ea) der Verbindungsmittel (2, 4, 5) entsprechen, wobei Rückstellmittel (53) zwischen den Schlitten (51) und die Führung (52) geschaltet sind, die das automatische Ausfahren des Schlittens (51) ermöglichen.

4. Vorrichtung zum Schutz von Fußgängern nach einem der vorhergehenden Ansprüche, **dadurch gekennzeichnet, dass** die Verschlussvorrichtung (9) des Mechanismus zum Öffnen des vorderen Abschnitts der Motorhaube (1) so ausgebildet ist, dass bei der Drehung der Motorhaube (1) um die sekundäre Achse (24) die Längsverschiebung und/oder das Absenken des vorderen Abschnitts der Motorhaube (1) in Bezug auf den Aufbau (3) des Fahrzeugs möglich wird.

5. Vorrichtung zum Schutz von Fußgängern nach Anspruch 4, **dadurch gekennzeichnet, dass** die Verschlussvorrichtung (9) des Mechanismus zum Öffnen des vorderen Abschnitts der Motorhaube (1) einen Riegel (91) von der allgemeinen Form eines Hakens umfasst, der eine Schließklappe (92) von der allgemeinen Form eines Drahtes in einem Durchgang (94) einschließen kann, welcher vom Haken und eventuell einem daran angrenzenden Element (93) festgelegt wird, wobei der Draht einen Einhängeabschnitt umfasst, der im Wesentlichen längs zum Fahrzeug verläuft, sodass er sich im Durchgang (94) in dieser Längsrichtung bewegen kann, wobei der Riegel (91) und die Schließklappe (92) am Aufbau (3) beziehungsweise an der Motorhaube (1) des Fahrzeugs befestigt sind oder umgekehrt.

6. Vorrichtung zum Schutz von Fußgängern nach einem der vorhergehenden Ansprüche, **dadurch gekennzeichnet, dass** die Hauptdrehachse (23) des Tragarms (2) in Bezug auf den Aufbau (3) des Fahrzeugs in der Nähe der unteren Enden der seitlichen Fensterholme des Fahrzeugs oder weiter zur Hinterseite des Fahrzeugs zurückgesetzt liegt.

7. Vorrichtung zum Schutz von Fußgängern nach einem der vorhergehenden Ansprüche, **dadurch gekennzeichnet, dass** die Mittel zum Erfassen eines Aufpralls eines Fußgängers im vorderen Abschnitt des Fahrzeugs vorgesehen sind und mit einer Datenverarbeitungs- und Steuereinrichtung der Verbindungsmittel (2, 4, 5) in Verbindung stehen, die für die Befestigung der Motorhaube (1) am Tragarm (2) sorgen.
